# EUROPEAN PATENT SPECIFICATION

(11) **EP 3 574 766 B1**
(45) Date of publication and mention of the grant of the patent: **30.10.2024**
(21) Application number: 18744636.4
(22) Date of filing: 22.01.2018
(51) Int. Cl.: A23G 3/34, A23G 3/42, A23G 3/44

(54) **A METHOD FOR PRODUCING A SOFT CANDY**
VERFAHREN ZUR HERSTELLUNG EINER WEICHEN SÜSSIGKEIT
PROCÉDÉ DE FABRICATION D'UN BONBON MOU

(30) Priority: 26.01.2017 JP 2017012342
(43) Date of publication of application: 04.12.2019
(73) Proprietor: Lotte Co., Ltd., Tokyo 160-0023 (JP)
(72) Inventor: DOGUCHI, Yasuhiro, Saitama-shi Saitama 336-0027 (JP); FUJIMOTO, Ichiro, Saitama-shi Saitama 336-0027 (JP)
(74) Representative: Wächtershäuser & Hartz Patentanwaltspartnerschaft mbB
(86) International application number: PCT/JP2018/001697
(87) International publication number: WO 2018/139381

(56) References cited:
- WO-A1-02/09530
- JP-A- 2006 158 234
- JP-A- 2010 172 273
- JP-A- 2010 252 681
- JP-A- 2011 109 999
- JP-A- 2013 198 461
- JP-A- 2013 198 461
- JP-A- H0 767 537
- JP-A- S63 148 934
- US-B1- 6 482 465

## Description

### Technical Field

The present invention relates to a method for producing a soft candy.

### Background Art

Soft candies are sweets composed mainly of a carbohydrate having a soft texture. In recent years, soft candies having softness and chewability, more specifically adequate elasticity during chewing are demanded. Soft candies are formed by cutting after extrusion, so the easiness in forming is an important factor besides texture. For example, if deformation or rolling up occurs during forming, the candy is unacceptable as a product.

On the other hand, many soft candies easily adhere to teeth, and thus are regarded to tend to cause caries. In addition, during chewing, the teeth are pulled by adhered candy, and loads are imposed to the teeth. Because of these reasons, soft candies may be avoided in fear of the influences on the teeth. In addition, some consumers are displeased with stickiness to teeth.

Under the above-described circumstances, there is a demand for soft candies having chewability, formability, and less adhesion to teeth.

Patent Literature 1 describes about a soft candy which does not adhere to teeth, but the candy features the softness at the start of chewing, and does not have adequate elasticity. In addition, less adhesion to teeth is not sufficient.

Patent Literature 2 discloses a gummy candy containing gum arabic and gelatin, the gummy candy having hardness and toughness in spite of sugarless. Gummy candies are different from soft candies in the moisture content and the production method, so that it is not easy to apply the technique for gummy candies to soft candies.

### Citation List

### Patent Literature

PTL 1: WO 02/009530 A
PTL 2: JP 2010-172273 A

### Summary of Invention

### Technical Problem

To provide a soft candy having good chewability and formability. To provide a soft candy which hardly adheres to teeth.

### Solution to Problem

Provided as not part of the invention is a soft candy including a sugar alcohol, gum arabic, and gelatin, wherein the content of the gum arabic is 0.1% by weight or more and less than 10.6% by weight in terms of the solid content, and the content of the gelatin is 0.1% by weight or more and less than 7.7% by weight in terms of the solid content. Provided, as the only part of the invention, is a method for producing a soft candy, in which a raw material containing a sugar alcohol, gum arabic, and gelatin is dissolved and sugar alcohol fine powder is added, wherein the content of gum arabic is 0.1% by weight or more and 7.0% by weight or less in terms of solid content, the content of gelatin is 0.1% by weight or more and 5.1% by weight or less in terms of solid content, a ratio of the sugar alcohol fine powder is 1.0% by weight or more and 59.1% by weight or less in the raw material, and an average particle size of the sugar alcohol fine powder is 50 pm or less. Provided as not part of the invention a soft candy produced by concentrating a solution prepared by dissolving raw materials including a sugar alcohol, gum arabic, and gelatin, and adding a sugar alcohol fine powder.

### Advantageous Effects of Invention

Provision and production of a soft candy having adequate chewability and formability are allowed. Provision and production of a soft candy having marked formability are allowed.

### Brief Description of Drawings

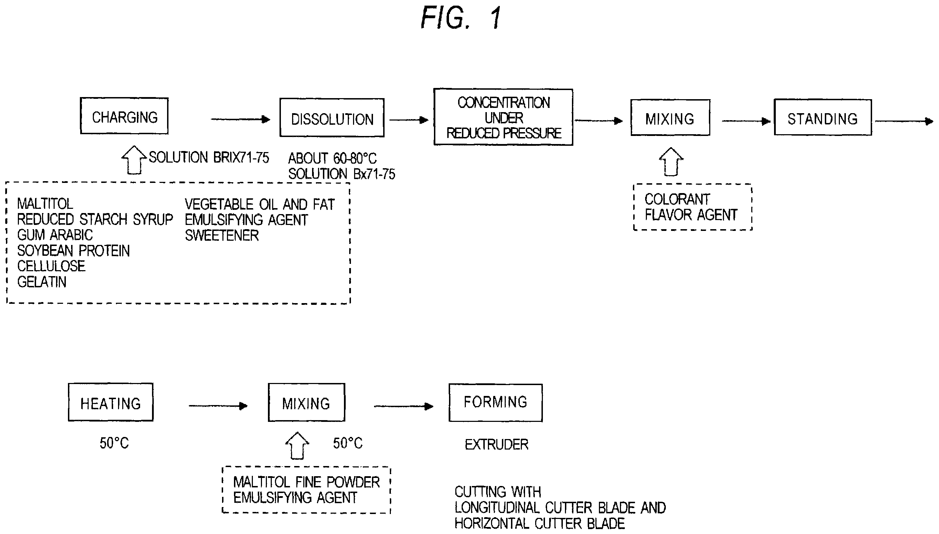

[Fig. 1] Fig. 1 is an example of the production of the soft candy of the present invention.

### Description of Embodiments

The present invention is defined by the present claims 1-3. 11

A first embodiment not part of the present invention provides a soft candy including a sugar alcohol, gum arabic, and gelatin, wherein the content of the gum arabic is 0.1% by weight or more and less than 10.6% by weight in terms of the solid content, and the content of the gelatin is in terms of the solid content 0.1% by weight or more and less than 7.7% by weight. Additionally, more preferably, the content of the gum arabic may be 1.8% by weight or more and 5.3% by weight or less in terms of the solid content, and the content of the gelatin may be 0.9% by weight or more and 3.4% by weight or less in terms of the solid content.

The soft candy of the present embodiment has adequate chewability and high formability. Chewability means the quality of the soft candy which is elastic when chewed and holds in the mouth for a certain period, and is a texture liked by consumers. The formability means the easiness of forming in the production of the soft candy.

A second embodiment part of the present invention provides a method for producing a soft candy, in which a raw material containing a sugar alcohol, gum arabic, and gelatin is dissolved and sugar alcohol fine powder is added, wherein the content of gum arabic is 0.1% by weight or more and 7.0% by weight or less in terms of solid content, the content of gelatin is 0.1% by weight or more and 5.1% by weight or less in terms of solid content, a ratio of the sugar alcohol fine powder is 1.0% by weight or more and 59.1% by weight or less in the raw material, and an average particle size of the sugar alcohol fine powder is 50 pm or less.

A third embodiment not part of the present invention provides a soft candy which is produced by concentrating a solution prepared by dissolving raw materials including a sugar alcohol, gum arabic, and gelatin, and adding a sugar alcohol fine powder.

The sugar alcohol fine powder refers to the sugar alcohol having a small particle size of crystal particles. The average particle size of the sugar alcohol fine powder is 50 um or less, and preferably 25 µm or less. By adding the sugar alcohol fine powder before forming, many fine crystals of the sugar alcohol remain in the product, and adhesion to the teeth decreases. Examples of the sugar alcohol fine powder include maltitol fine powder, xylitol fine powder, sorbitol fine powder, mannitol fine powder, and reduced palatinose fine powder. Among them, maltitol fine powder is preferred.

In the present description, when the term sugar alcohol is simply used, it refers to any sugar alcohol the particle size of which is not limited. In addition, when the term maltitol is simply used, it refers to any maltitol the particle size of which is not limited.

In the second embodiment, part of the present invention, preferably the gum arabic is contained in a solid content of 1.8% or more and 3.5% or less by weight, and the gelatin is contained in an amount of 0.9% or more and 2.6% or less by weight in terms of solid content. In the second embodiment, part of the present invention, preferably the ratio of the sugar alcohol fine powder is 9.9% or more and 24.6% or less in the raw material. The soft candy obtained according to the second embodiment has a feature that hardly adheres to teeth.

In addition, a fourth embodiment not part of the present invention provides a soft candy produced by concentrating a solution prepared by dissolving raw materials including a sugar alcohol, gum arabic, and gelatin, and adding a sugar alcohol fine powder, wherein the content of the gum arabic is 0.1% by weight or more and less than 10.6% by weight in terms of the solid content, and the content of the gelatin is in terms of the solid content 0.1% by weight or more and less than 7.7% by weight.

The soft candy prepared by the method according to the present embodiment part of the invention has good elasticity and formability, and hardly adheres to teeth.

The method for making the soft candy is described below. In the present invention, soft candy refers to the soft candy having a moisture content of about 5 to 10%. The moisture content can be measured based on the weight reduction when the candy is dried under reduced pressure.

The soft candy obtained by the method of the present invention contains, as raw materials, a sugar alcohol, gum arabic, and gelatin. Additionally, it may appropriately contain other ingredients such as an oil and fat, a protein, cellulose, a flavor agent, an emulsifying agent, a sweetener, and a colorant. Furthermore, the soft candy obtained by the method of the present invention may be sugar-coated.

Examples of the sugar alcohol include maltitol, erythritol, xylitol, sorbitol, isomalt, mannitol, lactitol, and reduced starch syrup. In the present invention, the most preferred examples of the sugar alcohol are maltitol and reduced starch syrup. Maltitol is also referred to as reduced malt sugar, and is generally obtained by reducing maltose, but may be any maltitol irrespective of the preparation or particle size.

Reduced starch syrup is obtained by reducing starch syrup, which is a decomposed product of starch, and may be selected from commercial products without any limitation.

Gum arabic is a water soluble polysaccharide prepared from Acacia Senegal or Acacia Seyal of acacia genus, or from the sap of the acacia genus, and may be selected from commercial products irrespective of origin.

Gelatin is obtained from collagen, which is a connective tissue of animal skin and bones, and may be referred to as glue. The gelatin used herein may be selected from those derived from pig skin, pig bone, cattle skin, cattle bone, or fish, regardless of origin. The bloom value indicating the strength of the gelatin is preferably about 250 or more.

When an oil or a fat is added, for example, vegetable oil and fat, animal oil and fat, salad oil, soybean oil, corn oil, sesame oil, rapeseed oil, canola oil, rice oil, rice bran oil, camellia oil, safflower oil, safflower oil, coconut oil, perilla oil, linseed oil, olive oil, arachis oil, almond oil, avocado oil, hazelnut oil, walnut oil, grape seed oil, cacao butter, peanut butter, palm oil, lard (pig tallow), fett (beef tallow), milk fat, butter, margarine, shortening, or fresh cream may be used.

When a protein is added, animal protein, vegetable protein, soybean history protein, milk history protein, albumen history protein, or other any protein may be used.

When an emulsifying agent is added, for example, organic acid monoglycerides, glycerol fatty acid esters, polyglycerol fatty acid esters, sucrose fatty acid esters, sorbitan fatty acid esters, propylene glycol fatty acid esters, lecithin, and milk components such as milk, skimmed milk powder, whole milk powder, and fresh cream may be used.

When a flavor agent is added, for example, mint essential oils such as peppermint oil and spearmint oil, citrus essential oils such as orange oil, lemon oil, grapefruit oil, lime oil, tangerine oil, and mandarin oil, known spice essential oils such as allspice, anise seed, basil, laurel, cardamom, celery, clove, cinnamon, cumin, dill, garlic, parsley, mace, mustard, onion, paprika, rosemary, and pepper, or known isolated or synthetic flavor agents such as oleoresins, limonene, linalool, nerol, citronellol, geraniol, citral, L-menthol, eugenol, cinnamic aldehyde , anethole, perilla aldehyde, vanillin, γ-undecalactone, allyl caproate, L-carvone, and maltol, and formulated flavor agents, which are prepared by mixing these citrus essential oils, mint essential oils, spice essential oils, and synthetic flavor agent at the appropriate ratio according to the purpose of expressing citrus mix, mix mint, and various fruits, may be used.

When a sweetener is added, the sweetener is not particularly limited, and its examples include monosaccharides such as arabinose, galactose, xylose, glucose, fucose, sorbose, fructose, rhamnose, ribose, isomerized liquid sugar, and N-acetyl glucosamine; disaccharides such as isotrehalose, sucrose, trehalulose, trehalose, neotrehalose, palatinose, maltose, melibiose, lactulose, and lactose; oligosaccharides such as α-cyclodextrin, β-cyclodextrin, isomaltooligosaccharide (for example, isomaltose, isomaltotriose, and panose), oligo-N-acetyl glucosamine, galactosyl sucrose, galactosyl lactose, galactopyranosyl (β1-3) galactopyranosyl (β1-4) glucopyranose, galactopyranosyl (β1-3) glucopyranose, galactopyranosyl (β1-6) galactopyranosyl (β1-4) glucopyranose, galactopyranosyl (β1-6) glucopyranose, xylooligosaccharide (for example, xylotriose and xylobiose), gentiooligosaccharide (for example, gentiobiose, gentiotriose, and gentiotetraose), stachyose, Theande oligo, nigerooligosaccharide (for example, nigerose), palatinose oligosaccharide, palatinose syrup, fructooligosaccharide (for example, kestose and nystose), fructofuranosyl nystose, polydextrose, maltosyl-β-cyclodextrin, maltooligosaccharide (for example, maltotriose, tetraose, pentaose, hexaose, and heptaose), raffinose, sugar coupled starch syrup (coupling sugar), soybean oligosaccharide, invert sugar, and starch syrup; sugar alcohols such as isomaltitol, erythritol, xylitol, glycerol, sorbitol, palatinit, maltitol, maltotetraitol, maltotriitol, mannitol, lactitol, reduced isomaltooligosaccharide, reduced xylooligosaccharide, reduced gentiooligosaccharide, reduced malt sugar starch syrup, and reduced starch syrup; and high sweetness sweeteners such as α-glucosyltransferase treated stevia, Aspartame, acesulfame potassium, alitame, licorice extract (glycyrrhizin), triammonium glycyrrhizinate, tripotassium glycyrrhizinate, trisodium glycyrrhizinate, diammonium glycyrrhizinate, dipotassium glycyrrhizinate, disodium glycyrrhizinate, curculin, saccharin, saccharin sodium, cyclamate, sucralose, stevia extract, stevia powder, dulcin, thaumatin, Tenryocha extract, Nigeria berry extract, neotame, neohesperidin dihydrochalcone, fructosyl transferase treatment stevia , Brazil licorice extract, miracle fruit extract, Siraitia grosvenorii extract, enzyme-treated licorice, and enzyme-degraded licorice.

An example of production of the soft candy of the present invention is described below. Firstly, a sugar alcohol, reduced starch syrup, gum arabic, gelatin, and, as needed, an emulsifying agent and others are mixed and dissolved. The temperature at this time is preferably from 60ºC to 80°C, and the Bx (the solid concentration in the solution) of the solution is preferably adjusted at about 65 or more and 80 or less. The concentration is carried out under reduced pressure, and the moisture content is preferably 10% or less. To the mixture, a sugar alcohol fine powder is further added, and mixed. The mixed dough is formed. The forming method is not limited.

The formed soft candy may be coated by, for example, sugar coating, or may not be coated. When sugar coating is applied, for example, the produced soft candy is appropriately aged, and sugar-coated with a dough containing a sugar alcohol, gum arabic, a flavor agent, and others.

The present invention is described below in detail based on the following examples, but will not be limited by these examples.

### Description of Embodiments

In the present example, the mixing ratio means the weights of the raw materials in the weight of the completed soft candy. The weights of the raw materials contain the moisture increased or lost during the production, so that the total of the mixing ratios may not be 100%.

The ratio in terms of the solid content refers to the ratio of a raw material in terms of the solid content (the weight excluding moisture content) in the weight of the completed soft candy.

The raw material mixing ratio refers to the ratio of the weight of a raw material in the total weight of the raw materials.

In the present example, the soft candy was produced as depicted in Fig. 1. More specifically, firstly, maltitol, reduced starch syrup, gum arabic, gelatin, soybean protein, cellulose, vegetable oil and fat, and an emulsifying agent were charged, dissolved at 60 to 80ºC, prepared to have a Bx (solid concentration in the solution) of 71 to 75, and concentrated under reduced pressure at 112ºC to a moisture content of about 8%. To the object, as needed, a flavor agent and others were added. At that time, the moisture content was about 6%. Thereafter, the temperature was set at 50ºC, and the maltitol fine powder and the emulsifying agent were added and mixed. The candy dough prepared as described above was formed. Specifically, the dough was formed into a sheet with an extruder, and cut with a longitudinal cutter blade and a lateral cutter blade.

The maltitol used in the charging step was Lesys General manufactured by Mitsubishi Shoji Foodtech Co., Ltd. The maltitol fine powder was Lesys fine powder manufactured by Mitsubishi Shoji Foodtech Co., Ltd. Lesys is the trade name of the maltitol manufactured by Mitsubishi Shoji Foodtech Co., Ltd. The cumulative distributions of their particle sizes are listed in the catalog, and the particle size of Lesys General is 60.48 µm (cumulative 10%), 176.8 µm (cumulative 50%), and 324.8 µm (cumulative 90%), and that of Lesys fine powder is 4.38 µm (cumulative 10%), 21.07 µm (cumulative 50%), and 51.76 µm (cumulative 90%).

The reduced starch syrup was SE30 manufactured by B Food Science Co., Ltd. The gelatin was derived from pig, and had a bloom value of about 250. The emulsifying agent was lecithin.

The soft candy of each test example was evaluated by five experienced panelists for adhesion to teeth, chewability, and formability. The evaluation criteria are as follows.

Less adhesion to teeth
3: Completely no adhesion to teeth
2: No adhesion to teeth
1: Slight adhesion to teeth, but acceptable
0: Significant adhesion to teeth

### Chewability

3: Chewability is sufficiently felt
2: Chewability is felt
1: Chewability is low, but acceptable
0: Chewability is not felt at all

### Formability

Good: When formed with a cutter, deformation (the size between the surfaces cut by the longitudinal blade, or the size between the surfaces cut by the lateral blade shortens, and the size in the thickness direction increases, more specifically the thickness increases) hardly occurs, and the dough can be cut at the predetermined size.

Acceptable: Some deformation occurs when formed with a cutter, but cutting is achieved without problem. Unacceptable: Significant deformation occurs when formed with a cutter, so that the dough cannot be cut at the predetermined size, or forming is impossible.

### Example 1

The soft candies of Test Examples 1 to 7 were produced according to the mixing ratios between the gum arabic and gelatin listed in Table 1.

The maltitol listed in Table 1 is added in the step of charging, and the maltitol fine powder was added in the process of second mixing. The increase and decrease of the gum arabic and gelatin were adjusted by changing the amounts of the maltitol and reduced starch syrup, and other raw materials were not increased nor decreased.

The mixing ratios listed in Table 1 are more than 100% in total, because the total contain the moisture content lost during the production. Table 2 lists the raw material mixing ratios wherein the weights of the raw materials are the ratios to the total weight of the raw materials.

The evaluation results of the soft candies of Test Examples 1 to 7 are given in Table 1. Of the evaluations in Table 1, the upper column lists the evaluation of the less adhesion to teeth and chewability by five panelists, and the lower column lists their sums. The comments are typical ones obtained from the five panelists.

The soft candy of Test Example 1 had no problem with forming, but had little chewability. The soft candies of Test Examples 2 to 6 had a texture having chewability, and particularly in Test Examples 3 to 6, a texture having clear chewability was obtained. On the other hand, in Test Example 6, the dough rolled up when cut with a cutter, and formability had a problem. In Test Example 7, the viscosity of the dough was too high, and the soft candy did not reach completion. The chewing candies of Test Examples 3 and 4 had markedly high chewability and formability.

In Tables 1 and 2 below, Test Example 7 is not part of the present invention.

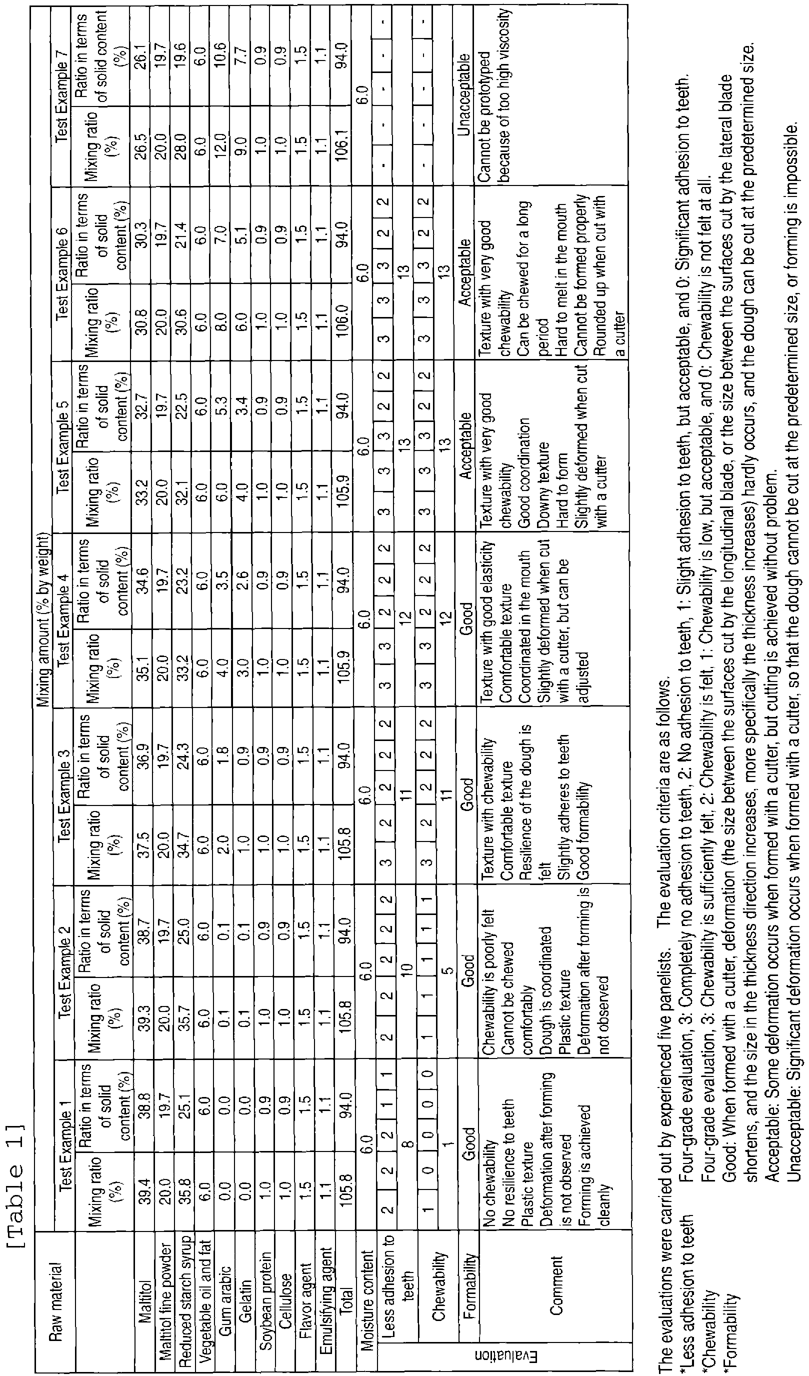

**[Table 2]**

| Raw material mixing ratio (%) | | | | | | | |
|---|---|---|---|---|---|---|---|
| | Test Example 1 | Test Example 2 | Test Example 3 | Test Example 4 | Test Example 5 | Test Example 6 | Test Example 7 |
| Maltitol | 37.2 | 37.1 | 35.4 | 33.1 | 31.4 | 29.1 | 25.0 |
| Maltitol fine powder | 18.9 | 18.9 | 18.9 | 18.9 | 18.9 | 18.9 | 18.9 |
| Reduced starch syrup | 33.8 | 33.7 | 32.8 | 31.4 | 30.3 | 28.9 | 26.4 |
| Vegetable oil and fat | 5.7 | 5.7 | 5.7 | 5.7 | 5.7 | 5.7 | 5.7 |
| Gum arabic | 0.0 | 0.1 | 1.9 | 3.8 | 5.7 | 7.5 | 11.3 |
| Gelatin | 0.0 | 0.1 | 0.9 | 2.8 | 3.8 | 5.7 | 8.5 |
| Soybean protein | 0.9 | 0.9 | 0.9 | 0.9 | 0.9 | 0.9 | 0.9 |
| Cellulose | 0.9 | 0.9 | 0.9 | 0.9 | 0.9 | 0.9 | 0.9 |
| Flavor agent | 1.4 | 1.4 | 1.4 | 1.4 | 1.4 | 1.4 | 1.4 |
| Emulsifying agent | 1.0 | 1.0 | 1.0 | 1.0 | 1.0 | 1.0 | 1.0 |
| Total | 100.0 | 100.0 | 100.0 | 100.0 | 100.0 | 100.0 | 100.0 |

### Example 2

The soft candies of Test Examples 8 to 15 were produced by the process given in Fig. 1, wherein the amount of the maltitol fine powder added during the second mixing was changed from 0% by weight to 75% by weight in terms of the mixing ratio as given in Table 3. The mixing ratio of the maltitol was also changed according to the increase and decrease of the maltitol fine powder.

The maltitol given in Table 2 was added in the step of charging, and the maltitol fine powder was added in the process of the second mixing.

The mixing ratios in Table 3 may not be 100% in total, because the total contains the moisture content increased or lost during the production. Table 4 lists the raw material mixing ratios, wherein the weights of the raw materials are the ratios to the total weight of the raw materials.

Table 5 lists the ratio between the maltitol added in the step of charging and the maltitol fine powder added in the process of the second mixing.

Of the evaluations of the soft candies of Test Examples 8 to 15, the upper column lists the evaluation of the less adhesion to teeth and chewability by five panelists, and the lower column lists their sums. The comments are typical ones obtained from the five panelists.

The soft candy of Test Example 8 easily adhered to teeth, but the soft candy of Test Examples 9 to 14 hardly adhered to teeth. The soft candy of Test Example 15 did not reach completion. The soft candy of Test Example 14 did not adhere to teeth, but lost chewability.

Example 2 indicates that a soft candy which hardly adheres to teeth can be produced by adding the maltitol fine powder during the second mixing depicted in Fig. 1. At this time, the soft candy hardly adhered to teeth when the ratio of the maltitol fine powder was 1.8% by weight or more in the total maltitol added in the production process (in the present example, the maltitol added during charging and the maltitol fine powder added during the second mixing). Furthermore, more remarkable effect was observed when the ratio was 18.1% by weight or more. On the other hand, the production of a soft candy was impossible when the ratio was more than 99% by weight.

In Tables 3, 4 and 5 below, Test Examples 14 and 15 are not part of the present invention.

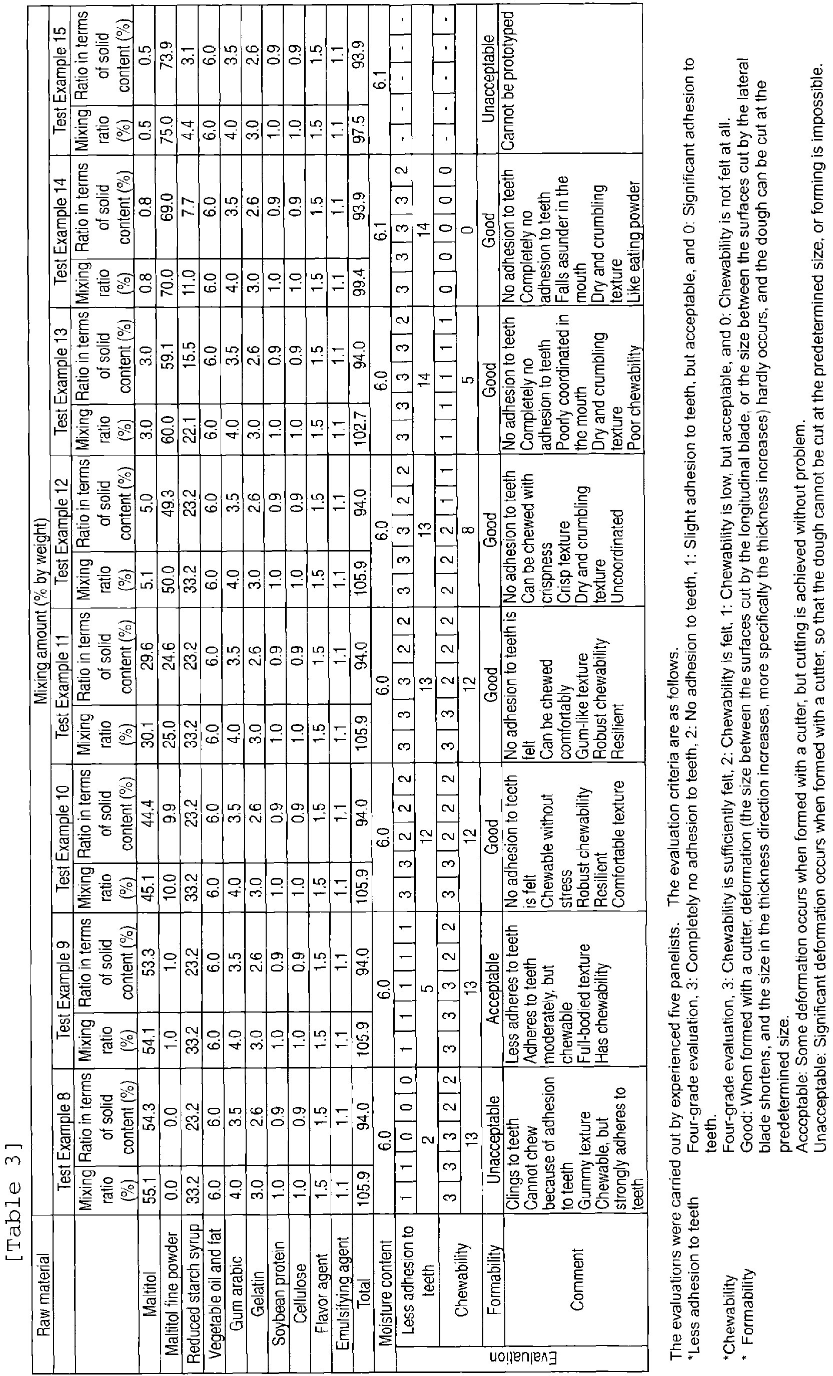

**[Table 4]**

| Raw material mixing ratio (%) | | | | | | | | |
|---|---|---|---|---|---|---|---|---|
| | Test Example 8 | Test Example 9 | Test Example 10 | Test Example 11 | Test Example 12 | Test Example 13 | Test Example 14 | Test Example 15 |
| Maltitol | 52.0 | 51.1 | 42.6 | 28.4 | 4.8 | 2.9 | 0.8 | 0.5 |
| Maltitol fine powder | 0.0 | 0.9 | 9.4 | 23.6 | 47.2 | 58.4 | 70.4 | 76.9 |
| Reduced starch syrup | 31.4 | 31.4 | 31.4 | 31.4 | 31.4 | 21.5 | 11.1 | 4.5 |
| Vegetable oil and fat | 5.7 | 5.7 | 5.7 | 5.7 | 5.7 | 5.8 | 6.0 | 6.2 |
| Gum arabic | 3.8 | 3.8 | 3.8 | 3.8 | 3.8 | 3.9 | 4.0 | 4.1 |
| Gelatin | 2.8 | 2.8 | 2.8 | 2.8 | 2.8 | 2.9 | 3.0 | 3.1 |
| Soybean protein | 0.9 | 0.9 | 0.9 | 0.9 | 0.9 | 1.0 | 1.0 | 1.0 |
| Cellulose | 0.9 | 0.9 | 0.9 | 0.9 | 0.9 | 1.0 | 1.0 | 1.0 |
| Flavor agent | 1.4 | 1.4 | 1.4 | 1.4 | 1.4 | 1.5 | 1.5 | 1.5 |
| Emulsifying agent | 1.0 | 1.0 | 1.0 | 1.0 | 1.0 | 1.1 | 1.1 | 1.1 |
| Total | 100.0 | 100.0 | 100.0 | 100.0 | 100.0 | 100.0 | 100.0 | 100.0 |

**[Table 5]**

| | Test Example 8 | Test Example 9 | Test Example 10 | Test Example 11 | Test Example 12 | Test Example 13 | Test Example 14 | Test Example 15 |
|---|---|---|---|---|---|---|---|---|
| Mixing ratio of maltitol | 55.1 | 54.1 | 45.1 | 30.1 | 5.1 | 3.0 | 0.8 | 0.5 |
| Mixing ratio of maltitol fine powder | 0.0 | 1.0 | 10.0 | 25.0 | 50.0 | 60.0 | 70.0 | 75.0 |
| Ratio of maltitol fine powder in total maltitol (%) | 0.0 | 1.8 | 18.1 | 45.4 | 90.7 | 95.2 | 98.9 | 99.3 |

## Claims

1. A method for producing a soft candy, in which a raw material containing a sugar alcohol, gum arabic, and gelatin is dissolved and sugar alcohol fine powder is added, wherein the content of gum arabic is 0.1% by weight or more and 7.0% by weight or less in terms of solid content, the content of gelatin is 0.1% by weight or more and 5.1% by weight or less in terms of solid content, a ratio of the sugar alcohol fine powder is 1.0% by weight or more and 59.1% by weight or less in the raw material, and an average particle size of the sugar alcohol fine powder is 50 µm or less.

2. The method for producing a soft candy according to Claim 1, wherein the gum arabic is contained in a solid content of 1.8% or more and 3.5% or less by weight, and the gelatin is contained in an amount of 0.9% or more and 2.6% or less by weight in terms of solid content.

3. The method for producing a soft candy according to Claim 2, wherein the ratio of the sugar alcohol fine powder is 9.9% or more and 24.6% or less in the raw material.

## Patentansprüche

1. Verfahren zur Herstellung eines Weichbonbons, bei dem ein Rohmaterial, das Zuckeralkohol, Gummi arabicum und Gelatine enthält, aufgelöst und Zuckeralkohol-Feinpulver hinzugefügt wird, wobei der Gehalt an Gummi arabicum 0,1 Gewichtsprozent oder mehr und 7,0 Gewichtsprozent oder weniger in Bezug auf den Feststoffgehalt beträgt, der Gehalt an Gelatine 0,1 Gewichtsprozent oder mehr und 5,1 Gewichtsprozent oder weniger in Bezug auf den Feststoffgehalt beträgt, ein Anteil des Zuckeralkohol-Feinpulvers 1,0 Gewichtsprozent oder mehr und 59,1 Gewichtsprozent oder weniger in dem Rohmaterial beträgt und eine durchschnittliche Partikelgröße des Zuckeralkohol-Feinpulvers 50 µm oder weniger beträgt.

2. Das Verfahren zur Herstellung eines Weichbonbons nach Anspruch 1, wobei das Gummi arabicum in einem Feststoffgehalt von 1,8 % oder mehr und 3,5 % oder weniger nach Gewicht enthalten ist und die Gelatine in einer Menge von 0,9 % oder mehr und 2,6 % oder weniger nach Gewicht in Bezug auf den Feststoffgehalt enthalten ist.

3. Das Verfahren zur Herstellung eines Weichbonbons nach Anspruch 2, wobei der Anteil des Zuckeralkohol-Feinpulvers im Rohmaterial 9,9 % oder mehr und 24,6 % oder weniger beträgt.

## Revendications

1. Procédé de production d'un bonbon mou, dans lequel une matière première contenant un alcool de sucre, de la gomme arabique et de la gélatine est dissoute et une poudre fine d'alcool de sucre est ajoutée, dans lequel la teneur en gomme arabique est de 0,1 % en poids ou plus et de 7,0 % en poids ou moins en termes de teneur en solides, la teneur en gélatine est de 0,1 % en poids ou plus et de 5,1 % en poids ou moins en termes de teneur en solides, un taux de la poudre fine d'alcool de sucre est de 1,0 % en poids ou plus et de 59,1 % en poids ou moins dans la matière première, et une taille moyenne de particules de la poudre fine d'alcool de sucre est de 50 µm ou moins.

2. Procédé de production d'un bonbon mou selon la revendication 1, dans lequel la gomme arabique est contenue dans une teneur en solides de 1,8 % en poids ou plus et de 3,5 % en poids ou moins, et la gélatine est contenue dans une quantité de 0,9 % en poids ou plus et de 2,6 % en poids ou moins en termes de teneur en solides.

3. Procédé de production d'un bonbon mou selon la revendication 2, dans lequel le taux de la poudre fine d'alcool de sucre est de 9,9 % ou plus et de 24,6 % ou moins dans la matière première.
